# EUROPÄISCHE PATENTSCHRIFT

(11) **EP 1 284 356 B1**
(45) Veröffentlichungstag und Bekanntmachung des Hinweises auf die Patenterteilung: **21.02.2007**
(21) Anmeldenummer: 02014199.0
(22) Anmeldetag: 26.06.2002
(51) Int. Cl.: F02M 35/12, F02M 35/116

(54) **Sauganlage für eine Brennkraftmaschine**
Intake system for an internal combustion engine
Système d'admission pour un moteur à combustion interne

(30) Priorität: 14.08.2001 DE 20113496 U
(43) Veröffentlichungstag der Anmeldung: 19.02.2003
(73) Patentinhaber: Dr.Ing. h.c.F. Porsche Aktiengesellschaft, 70435 Stuttgart (DE)
(72) Erfinder: Kodweiss, Jürgen, 71287 Weissach (DE); Horlacher, Wolfgang, 71229 Leonberg-Ramtel (DE); Schorn, Jürgen, 71277 Rutesheim (DE); Fritz, Andreas, 75443 Ötisheim (DE)

(56) Entgegenhaltungen:
- DE-A- 19 827 410
- DE-A- 19 902 951
- DE-A- 19 924 870
- DE-A- 19 931 934
- US-A- 4 874 062

## Beschreibung

Die Erfindung betrifft eine Sauganlage für eine Brennkraftmaschine nach dem Oberbegriff des Patentanspruchs 1. Die Reduktion von Geräuschemissionen hochentwickelter Brennkraftmaschinen ist eine vorrangige Entwicklungsaufgabe, bei der den Bauteilen wie Sauganlage, Luftfilter oder dgl. eine besondere Bedeutung zukommt. Durch die hohe Gasdynamik innerhalb der Sauganlage treten hohe Strömungsgeschwindigkeiten auf. Dies führt an verschiedenen Radien und Übergängen in der Sauganlage zu Strömungsabrissen, auf Grund derer das Luftvolumen breitbandig angeregt wird; eine entsprechende Geräuschentwicklung ist die Folge.

Aus der DE 198 27 410 A1 ist ein Ansaugkanal einer Verbrennungskraftmaschine beschrieben, bei der mit Hilfe einer als Resonatorkammer wirkenden Innenstruktur bei bestimmten Frequenzen auftretende Ansauggeräusche gedämpft werden sollen. Die mit den Öffnungen versehene Innenstruktur ist dabei im Sammelraum des Saugrohrs angebracht. Derartige Einlegestrukturen können jedoch die Luftmassenströmungen nachteilig beeinflussen.

Aus der DE 199 24 870 A1 ist eine Sauganlage für eine Brennkraftmaschine bekannt, bei der gattungsgemäß eine Reflexionskammer ausgebildet ist, die einerseits durch eine mit Öffnungen versehene eingesetzte Trennwand begrenzt ist und andererseits durch einen an der Außenseite der Behälterwand befestigten Deckel abgeschlossen ist.

Es ist Aufgabe der Erfindung, eine Resonator- bzw. Reflektionskammer zur Dämpfung von Ansauggeräuschen für eine Sauganlage einer Brennkraftmaschine zu schaffen, bei der die Lufteinströmung in das Saugrohr nicht beeinträchtigt ist. Darüber hinaus soll die Reflektionskammer fertigungstechnisch einfach herstellbar und über die gesamte Laufzeit des Motors zuverlässig an der Sauganlage der Brennkraftmaschine befestigt sein.

Diese Aufgabe wird erfindungsgemäß durch die Merkmale des Patentanspruchs 1 gelöst.

Dadurch, dass die für die Ausbildung der Resonatorkammer erforderlichen Öffnungen im Wandungsabschnitt des Behälters der Sauganlage eingebracht und über einen die Öffnungen nach außen hin abdichtenden Deckel abgeschlossen sind, bleibt die strömungsoptimierte Innenstruktur der Sauganlage unverändert, so dass das Einströmverhalten der angesaugten Verbrennungsluft unbeeinflusst ist. Sowohl der Behälter als auch der die Öffnungen abdichtende Deckel bestehen dabei aus Kunststoff, die durch Vibrationsschweißen miteinander verbunden sind. Für eine zuverlässige und sichere Schweißnahtverbindung ist auf der Außenseite des Behälters ein die Öffnungen umschließender Steg angeordnet, der als Schweißnaht für das Vibrationsschweißen vorgesehen ist.

Damit während des Schweißvorgangs der Schweißaustrieb fixiert ist, verläuft jeweils parallel zum Mittelsteg ein Innen- und eine Außensteg, die zur Begrenzung des Schweißaustriebs dienen.

In der Zeichnung ist ein Ausführungsbeispiel der Erfindung dargestellt, das nachstehend näher beschrieben ist.

Es zeigen:

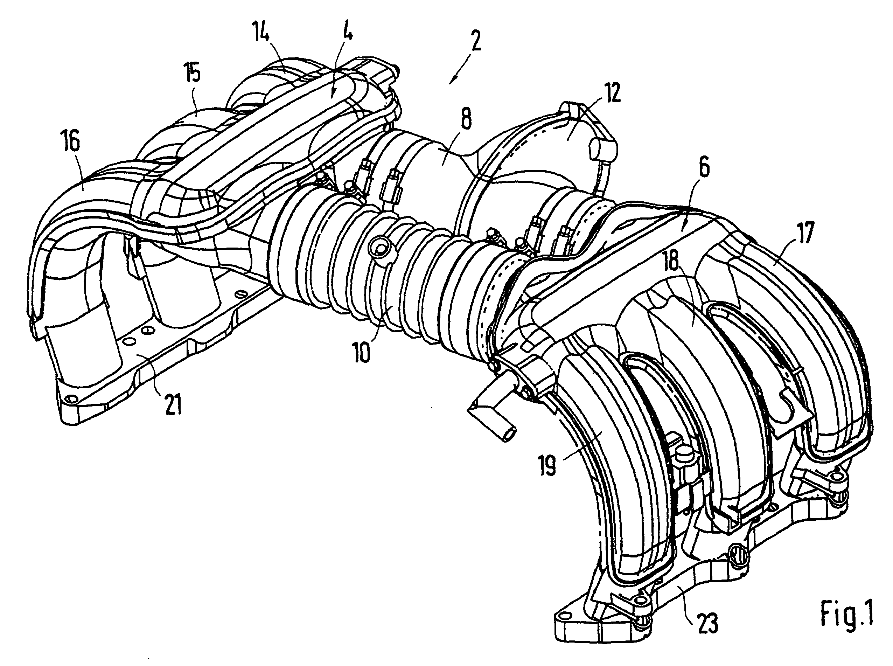

- Fig. 1: eine Explosionsdarstellung einer Sauganlage einer mehrzylindrigen Brennkraftmaschine,
- Fig. 2: eine Explosionsdarstellung eines Teils der Sauganlage und

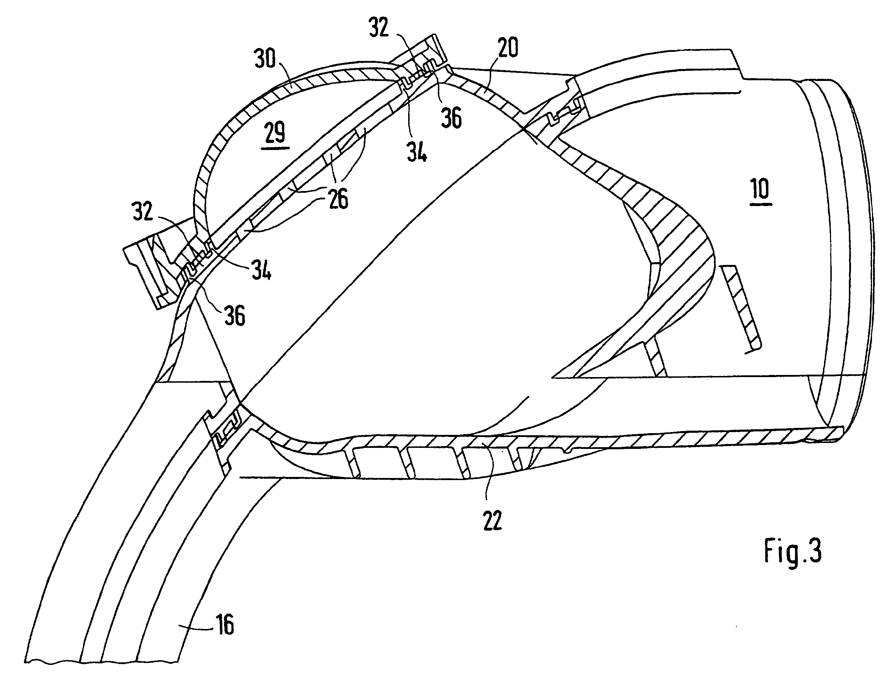

- Fig. 3: eine Schnittdarstellung durch die Sauganlage im Bereich einer Resonatorkammer.

### Beschreibung des Ausführungsbeispiels

Die für einen 6 - Zylinder - Boxermotor ausgebildete Sauganlage 2 weist für jede Zylinderreihe einen Resonanzbehälter 4 und 6 auf, die beide über zwei Verbindungsrohre 8 und 10 miteinander verbunden sind; Verbindungsrohr 8 ist als Verteilerohr und Verbindungsrohr 10 als Resonanzrohr mit schaltbarer Klappe ausgebildet. An das Verteilerrohr 8 wird auf bekannte Art und Weise über ein Anschlussrohr 12 das nicht dargestellte Drosselklappengehäuse befestigt. Von den beiden Resonanzbehältern 4 und 6 führen jeweils drei Einzelrohre 14 bis 16 bzw. 17 bis 19 zu jeweils einem nicht dargestellten Zylinderkopf an denen diese Einzelrohre über entsprechende Flansche 21 und 23 befestigt sind.

Der im folgenden näher beschriebene Aufbau der beiden Resonanzbehälter 4 und 6 wird exemplarisch anhand des der linken Zylinderbankreihe zugeordneten Resonanzbehälters 4 beschrieben, da der Aufbau des für die rechte Zylinderbankreihe vorgesehenen Resonanzbehälters 6 derselbe ist.

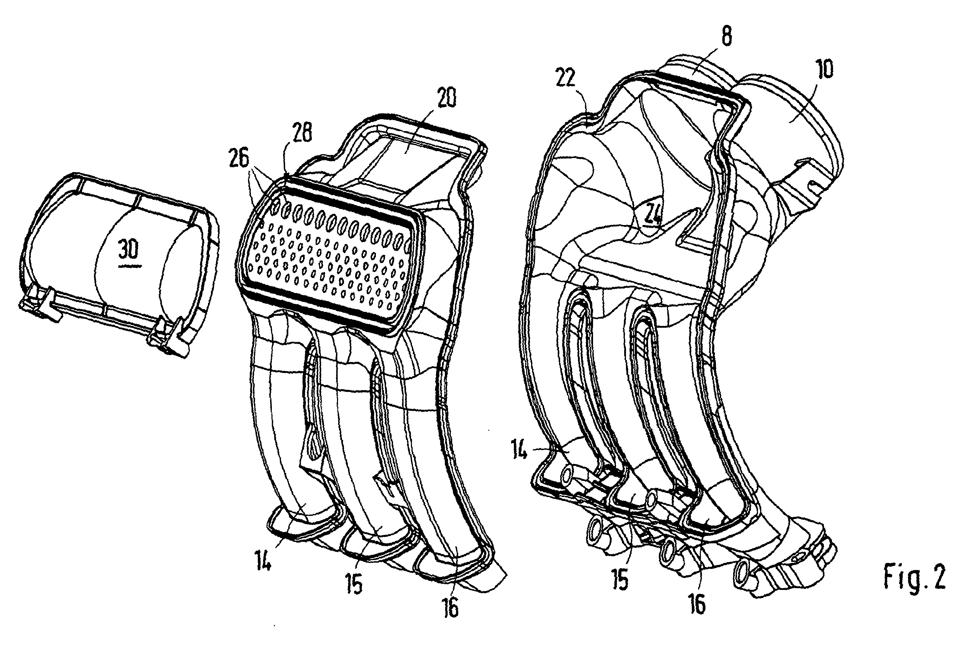

Wie aus Fig. 2 ersichtlich, ist der Resonanzbehälter 4 sowie die daran einstückig angebundenen Einzelrohre 14 bis 16 in einer Zweischalentechnik hergestellt, wobei eine Oberschale 20 mit einer Unterschale 22 durch Vibrationsschweißen zusammengefügt sind. Im Resonanzbehälter 4 ist ein Resonanzraum 24 ausgebildet, über den die angesaugte Verbrennungsluft über die Einzelrohre 14 bis 16 in den Zylinderkopf und damit in den Brennraum der einzelnen Zylinder übertritt. In der Oberschale 20 ist ein mit Öffnungen 26 vorgesehener Wandungsabschnitt 28 ausgebildet, der, wie im folgenden noch näher beschrieben, ein Teil einer an den Resonanzraum 24 angekoppelten Reflektions- bzw. Resonatorkammer 29 ist. Der gelochte Wandungsabschnitt 28 ist durch einen Deckel 30 nach außen hin abgeschlossen, wobei der Deckel 30 durch Vibrationsschweißen am Resonanzbehälter 4 befestigt ist. Dazu ist der gelochte Wandungsabschnitt 28 von einem umlaufenden Steg 32 umrandet, der als Schweißnaht für die beiden aus Kunststoff bestehenden Bauteile 20 und 30 dient. Damit der sich beim Vibrationsschweißen verflüssigende Kunststoff weder nach innen in die Reflektionskammer 29 noch nach außen übertreten kann, sind parallel zum umlaufenden Steg ein Innen- (34) und ein Außensteg 36 vorgesehen, die zur Begrenzung bzw. Aufnahme des Schweißaustriebs dienen. Die über die Öffnungen 26 an den Resonanzraum 24 angebundene Reflektionskammer 29 trägt zu einer Reduzierung der Geräusche bei, die auf Grund der hohen Strömungsgeschwindigkeiten der angesaugten Luftmassen und den an verschiedenen Radien und Übergängen in der Sauganlage auftretenden Strömungsabrissen entstehen.

## Patentansprüche

1. Sauganlage für eine Brennkraftmaschine, mit
- mindestens einem Resonanzbehälter (4, 6), der innenseitig ein Resonanzvolumen (24) einschließt, und der über Zuführungsleitungen (14 bis 19) mit den Ansaugkanälen eines Zylinderkopfes verbunden ist, wobei die Öffnungen der Ansaugkanäle zur Gaswechselsteuerung durch Ventile überwacht sind,
- mindestens einer auf dem Resonanzbehälter (4, 6) angeordneten Reflektionskammer (29), die über eine Lochstruktur mit dem Resonanzvolumen (24) in Verbindung steht,
- wobei zur Ausbildung der Reflektionskammer (29) die Lochstruktur durch einen an der Außenseite der Behälterwand (4, 6) befestigten Deckel (30) abgeschlossen ist,
**dadurch gekennzeichnet, dass** die Lochstruktur durch Öffnungen (26) gebildet ist, die in einem Wandungsabschnitt (28) des Resonanzbehälters (4, 6) angeordnet sind.

2. Sauganlage nach Anspruch 1, **dadurch gekennzeichnet, dass** der Resonanzbehälter (4, 6) und der Deckel (30) aus Kunststoff bestehen und beide Bauteile (4, 6, 30) durch Vibrationsschweißen miteinander verbindbar sind.

3. Sauganlage nach Anspruch 1 oder 2, **dadurch gekennzeichnet, dass** die im Wandungsabschnitt (28) des Resonanzbehälters (4, 6) vorgesehen Öffnungen (26) von einem Steg (32) umschlossen sind, der als Schweißnaht für das Vibrationsschweißen vorgesehen ist.

4. Sauganlage nach Anspruch 3, **dadurch gekennzeichnet, dass** parallel zum Steg (32) ein Innen- (34) und eine Außensteg (36) verlaufen, die der Aufnahme bzw. Begrenzung des Schweißaustriebs dienen.

## Claims

1. An intake system for an internal-combustion engine, comprising
- at least one resonance container (4, 6) which encloses a resonance volume (24) on the inside and is connected by supply lines (14 to 19) to the intake ports of a cylinder head, wherein the openings of the intake ports are monitored by valves for gas-exchange control,
- at least one reflection chamber (29) which is arranged on the resonance container (4, 6) and communicates with the resonance volume (24) via a perforated structure,
- wherein, to form the reflection chamber (29), the perforated structure is closed off by a cover (30) fixed to the outside of the container wall (4, 6),
**characterised in that** the perforated structure is formed by openings (26) provided in a wall portion (28) of the resonance container (4, 6).

2. An intake system according to claim 1, **characterised in that** the resonance container (4, 6) and the cover (30) comprise plastics, and the two components (4, 6, 30) are connectable to one another by vibration welding.

3. An intake system according to claim 1 or 2, **characterised in that** the openings (26) provided in the wall portion (28) of the resonance container (4, 6) are surrounded by a rib (32) provided as a weld seam for vibration welding.

4. An intake system according to claim 3, **characterised in that** an inner (34) and an outer rib (36) extend parallel to the rib (32) and serve to receive or define the weld flow.

## Revendications

1. Système d'admission pour un moteur à combustion interne, avec au moins un caisson de résonance (4, 6) comprenant un volume de résonance (24) intérieur et relié par des conduits d'amenée (14 à 19) aux canaux d'admission d'une culasse de cylindre, les ouvertures des canaux d'admission étant surveillées par des soupapes pour la commande des échanges gazeux,
au moins une chambre de réflexion (29) disposée sur le caisson de résonance (4, 6), reliée au volume de résonance (24) par une structure perforée,
la structure perforée étant fermée par un couvercle (30) fixé sur la face extérieure de la paroi du caisson (4, 6) pour former la chambre de réflexion (29),
**caractérisé en ce que** la structure perforée est formée par des ouvertures (26) disposées dans une section de paroi (28) du caisson de résonance (4,6).

2. Système d'admission selon la revendication 1, **caractérisé en ce que** le caisson de résonance (4, 6) et le couvercle (30) sont en matière plastique, et **en ce que** les deux composants (4, 6, 30) peuvent être raccordés l'un à l'autre par soudure par vibrations.

3. Système d'admission selon la revendication 1 ou 2, **caractérisé en ce que** les ouvertures (26) prévues dans la section de paroi (28) du caisson de résonance (4,6) sont entourées par une nervure (32) prévue en tant que cordon de soudure pour la soudure par vibrations.

4. Système d'admission selon la revendication 3, **caractérisé en ce qu'**une nervure intérieure (34) et une nervure extérieure (36) s'étendent parallèlement à la nervure (32) et servent de logement ou de délimitation du débordement de soudure.
